# EUROPÄISCHE PATENTSCHRIFT

(11) **EP 1 733 458 B1**
(45) Veröffentlichungstag und Bekanntmachung des Hinweises auf die Patenterteilung: **11.07.2018**
(21) Anmeldenummer: 05716248.9
(22) Anmeldetag: 19.03.2005
(51) Int. Cl.: H01R 4/2425, H01R 13/11, H04Q 1/14, H01R 13/703

(54) **STECKVERBINDER FÜR LEITERPLATTEN**
PLUG-IN CONNECTOR FOR PRINTED CIRCUITS
CONNECTEUR POUR CARTES DE CIRCUITS IMPRIMES

(30) Priorität: 07.04.2004 DE 102004017605
(43) Veröffentlichungstag der Anmeldung: 20.12.2006
(73) Patentinhaber: CommScope Technologies LLC, Hickory, NC 28602 (US)
(72) Erfinder: BUSSE, Ralf-Dieter, 15366 Hoppegarten (DE); MÜLLER, Manfred, 13187 Berlin (DE)
(74) Vertreter: Patentanwälte Bressel und Partner mbB
(86) Internationale Anmeldenummer: PCT/EP2005/002968
(87) Internationale Veröffentlichungsnummer: WO 2005/101587

(56) Entgegenhaltungen:
- EP-A- 0 777 298
- EP-A- 1 286 420
- DE-A1- 19 743 329
- DE-C1- 19 652 422
- US-A- 4 561 712

## Beschreibung

Die Erfindung betrifft einen Steckverbinder für Leiterplatten. Aus der DE 38 28 904 C2 ist ein Steckverbinder für Leiterplatten bekannt, bestehend aus mit den Leiterbahnen der Leiterplatte elektrisch leitend verbundenen Kontaktelementen und aus einer mit Gegenkontakten versehenen Steckbuchse, wobei die Kontaktelemente als elektrisch leitfähige, mit abgewinkelten Streifenteilen zum Durchgreifen von an der Leiterplatte ausgebildeten Aufnahmeöffnungen versehene und zur Kontaktierung mit einer der Leiterbahnen dienenden flachen Metallstreifen ausgebildet sind, die mit den Leiterbahnen elektrisch leitend verbunden und auf einem Randbereich der Leiterplatte aufgebracht sind, wobei die Steckbuchse mit einer Aufnahmeöffnung zum Aufstecken auf den Randbereich der Leiterplatte und mit den Gegenkontakten zur Kontaktierung der Metallstreifen versehen ist, wobei jeder Metallstreifen zwei mit Längsschlitzen und mit seitlichen Rastnasen zum Hintergreifen der Leiterplatte versehene, abgewinkelte federnde Streifenteile zum Durchstecken durch und zum Verrasten in zwei im Bereich der Leiterbahn der Leiterplatte angebrachten, als Aufnahmeöffnungen dienenden Durchgangsbohrungen aufweist. Nachteilig an dem bekannten Steckverbinder ist die relativ aufwendige Kontaktierung der Leiterplatte.

Aus der DE 100 29 649 C2 ist ein Verteileranschlussmodul für die Telekommunikations- und Datentechnik bekannt, umfassend ein Gehäuse, in dem von außen zugänglich Eingangs- und Ausgangskontakte zum Anschließen von Leitungen oder Adern angeordnet sind, wobei das Gehäuse mit einem Hohlraum ausgebildet ist, in dem eine Leiterplatte mit Funktionselementen angeordnet ist, die in dem Gehäuse abgestützt ist, wobei die Funktionselemente elektrisch zwischen den Eingangs- und Ausgangskontakten und die Eingangskontakte und die Ausgangskontakte an gegenüberliegenden Stirnseiten des Gehäuses angeordnet sind. Die Eingangs- und Ausgangskontakte können dabei als Schneid-Klemm-Kontakte ausgebildet sein, die jeweils mit einem gabelförmigen Kontakt ausgebildet sind, mittels dessen eine kraftschlüssige elektrische Verbindung zu den Funktionselementen herstellbar ist. Auf der Leiterplatte sind Kontaktpads angeordnet, die sich vorzugsweise auf der Ober- und der Unterseite der Leiterplatte befinden. Diese kraftschlüssigen Verbindungen sind erheblich toleranter gegenüber Fertigungs- und Montagetoleranzen als Lotverbindungen. Dadurch können durch Aufrasten der gabelförmigen Kontakte auf die Kontaktpads alle Schneid-Klemm-Kontakte simultan kontaktiert werden. Des Weiteren erlaubt diese Kontaktierung eine einfache Demontage, falls beispielsweise eine defekte Leiterplatte ausgewechselt werden muss. Zur Herstellung des Verteileranschlussmoduls wird die Leiterplatte mit den Funktionselementen in ein erstes Gehäuseteil eingeschoben und ein zweites, die Eingangskontakte tragendes Gehäuseteil, aufgerastet. Hierzu sind die Schneid-Klemm-Kontakte am Gehäuse fixiert, wohingegen die Gabelkontakte freistehen. Da beim nachfolgenden Beschalten der Schneid-Klemm-Kontakte große Kräfte auftreten können, kann zusätzlich über die volle Breite der Leiterplatte ein kunststoffförmiges Halte- bzw. Stützelement auf die Leiterplatte aufgerastet werden, was die gabelförmigen Kontakte auf der Leiterplatte fixiert.

Weiter ist es aus der Druckschrift bekannt, zwischen einem Eingangs- und Ausgangskontakt jeweils einen Trennkontakt anzuordnen, der von außen zugänglich ist, wobei der Trennkontakt auf der Unterseite der Leiterplatte angeordnet ist. Die Folge ist ein relativ komplexer Montagevorgang, da die Trennkontakte zwischen Leiterplatte und Gehäuse eingespannt werden müssen.

Aus der DE 101 11 571 A1 ist ein elektrisches Kontaktelement für eine Steckverbinderanordnung bekannt. Das Kontaktelement ist an einem Ende mit einem Schneidklemmbereich und anderseitig mit einem Gabelkontakt ausgebildet. Zur Erhöhung der Elastizität des Gabelkontaktes sind die Kontaktierungsarme direkt an dem unteren Bereich eines seitlichen Verbindungsstückes der Doppelschneidklemmen angebunden und anschließend zur Mitte des Kontaktelementes hin abgekröpft, so dass ein verlängerter Federweg resultiert.

Aus der DE 38 06 263 A1 bzw. der DE 199 45 412 A1 ist jeweils ein Steckverbinder für Leiterplatten bekannt, umfassend eine Anzahl von Kontaktelementen, wobei die Kontaktelemente jeweils zwei Anschlussseiten aufweisen, wobei die eine Anschlussseite als Schneid-Klemm-Kontakt zum Anschließen von Adern und die andere Anschlussseite als Gabelkontakt zum Kontaktieren von Anschlussflächen auf einer Leiterplatte ausgebildet ist, und ein Kunststoffgehäuse, in das die Schneid-Klemm-Kontakte der Kontaktelemente einsteckbar sind, wobei der Schneid-Klemm-Kontakt und der Gabelkontakt zueinander verdreht angeordnet sind und mindestens eine Unterkante des Schneid-Klemm-Kontaktes sich am Kunststoffgehäuse abstützt, so dass die Kontaktelemente bei auftretenden Anschaltkräften auf die Schneid-Klemm-Kontakte verliersicher in dem Kunststoffgehäuse gehalten werden, wobei das Kunststoffgehäuse mindestens einen kammerförmigen Bereich umfasst und die Gabelkontakte in Längsrichtung von dem Kunststoffgehäuse vollständig aufgenommen sind.

Aus der EP 0 777 298 A2 ist ein Steckverbinder für Leiterplatten bekannt, umfassend eine Anzahl von Kontaktelementen, wobei die Kontaktelemente jeweils zwei Anschlussseiten aufweisen, wobei die eine Anschlussseite als Schneid-Klemm-Kontakt zum Anschließen von Adern und die andere Anschlussseite als Leiterplattenkontakt zum Kontaktieren einer Leiterplatte ausgebildet ist, und ein Kunststoffgehäuse, in das die Schneid-Klemm-Kontakte der Kontaktelemente einsteckbar sind, wobei mindestens eine Unterkante des Schneid-Klemm-Kontaktes sich am Kunststoffgehäuse abstützt, so dass die Kontaktelemente bei auftretenden Anschaltkräften auf die Schneid-Klemm-Kontakte verliersicher in dem Kunststoffgehäuse gehalten werden, wobei das Kunststoffgehäuse mindestens einen kammerförmigen Bereich umfasst, wobei das Kontaktelement zweiteilig ausgebildet ist, wobei ein erstes Teil des Kontaktelementes den Schneid-Klemm-Kontakt und ein zweites Teil den Leiterplattenkontakt umfasst, wobei an beiden Teilen des Kontaktelementes jeweils ein Kontaktschenkel angeordnet ist, wobei die beiden Kontaktschenkel einen Trennkontakt bilden.

Ausgehend von diesem bekannten Stand der Technik liegt der Erfindung das technische Problem zugrunde, einen Steckverbinder zu schaffen, mittels dessen ein fertigungstechnisch leichter herstellbares Verteileranschlussmodul mit Trennkontakten gebaut werden kann. Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu ist das Kontaktelement zweiteilig ausgebildet, wobei ein erstes Teil des Kontaktelementes den Schneid-Klemm-Kontakt und das zweite Teil den Gabelkontakt umfasst, wobei an beiden Teilen des Kontaktelementes jeweils ein Kontaktschenkel angeordnet ist, wobei im zusammengesetzten Zustand die beiden Kontaktschenkel einen Trennkontakt bilden. Hierdurch wird der Trennkontakt in den Steckverbinder integriert. Dies vereinfacht den Montagevorgang eines Verteileranschlussmoduls erheblich, da nur der zusammengesetzte Steckverbinder auf die Leiterplatte geschoben werden muss. Eine separate Montage der Trennkontakte entfällt, da diese automatisch beim Zusammenbau des Steckverbinders sich bilden. Des Weiteren kann der Steckverbinder bereits vor dem Aufschieben auf die Leiterplatte mit Kabeladern beschaltet werden, da die Schneid-Klemm-Kontakte sich im Gehäuse abstützen und so die Anschaltkräfte aufnehmen können. Dabei ist das Kunststoffgehäuse zweistückig ausgebildet, wobei die Gehäuseteile miteinander verrastbar sind. Ein Vorteil des zweiteiligen Gehäuses ist die leichte Demontage, wodurch sehr einfach Kunststoff- und Metallteile für Recyclingzwecke getrennt werden können. Der Zusammenbau erfolgt ganz einfach, indem das erste Gehäuseteil mit dem ersten Teil des Kontaktelementes und das zweite Gehäuseteil mit dem zweiten Teil des Kontaktelementes bestückt werden und anschließend die beiden Gehäuseteile miteinander verrastet werden. Dabei sind die Gabelkontakte in Längsrichtung von dem Kunststoffgehäuse vollständig aufgenommen, wobei das erste Gehäuseteil den Schneid-Klemm-Kontakt und das zweite Gehäuseteil den Gabelkontakt aufnimmt, wobei sich der Schneid-Klemm-Kontakt mit seiner Unterkante auf einem geschlitzten Klemmsteg des zweiten Gehäuseteils abstützt, wobei sich der Klemmsteg zwischen den beiden unteren Bereichen des Schneid-Klemm-Kontaktes und des Gabelkontaktes befindet, der Gabelkontakt in dem Schlitz des Klemmsteges liegt und auf dem zweiten Gehäuseteil aufliegt und durch das erste Gehäuseteil von oben eingespannt wird.

Der Trennkontakt ist dabei vorzugsweise derart ausgebildet, dass dieser von der gleichen Seite wie die Schneid-Klemm-Kontakte zugänglich ist. Hierzu wird der Kontaktschenkel am ersten Teil von der Unterkante des Schneid-Klemm-Kontakes nach oben in Richtung des Schneid-Klemm-Kontaktes gebogen, wohingegen der Kontakschenkel vom zweiten Teil in entgegengesetzte Richtung zum Gabelkontakt läuft.

In einer bevorzugten Ausführungsform sind die Kontaktschenkel derart ausgebildet, dass diese einen Kontaktbereich und einen Einsteckbereich bilden, wobei durch Einstecken eines Trennsteckers in den Einsteckbereich die Kontaktschenkel im Kontaktbereich voneinander wegbewegt werden, wobei der Trennstecker den Kontaktbereich nicht berührt. Hierdurch wird sichergestellt, dass durch Abrieb des meist aus Kunststoff bestehenden Trennsteckers der Kontaktbereich nicht verschmutzt wird, was die Kontaktgüte reduzieren würde.

In einer weiteren bevorzugten Ausführungsform sind in dem kammerförmigen Bereich an den Innenseiten Rippen angeordnet, die Führungen für die Gabelkontakte definieren, wobei die Kontaktbereiche der Gabelkontakte über die Rippen hervorstehen. Dabei sind die Gabelkontakte in Längsrichtung von dem Kunststoffgehäuse vollständig aufgenommen. Hierdurch sind alle Gabelkontakte definiert zueinander ausgerichtet und lassen sich einfacher auf die Leiterplatte aufschieben, da ein Verkanten der Gabelkontakte ausgeschlossen ist.

In einer weiteren bevorzugten Ausführungsform sind die Rippen im vorderen Bereich abgeschrägt, wodurch der Aufsteckvorgang vereinfacht wird.

In einer weiteren bevorzugten Ausführungsform sind der Schneid-Klemm-Kontakt und der Gabelkontakt zueinander im Bereich von 45° zueinander verdreht angeordnet.

In einer weiteren bevorzugten Ausführungsform ist der Steckverbinder mit Drahtführungsösen ausgebildet.

In einer weiteren bevorzugten Ausführungsform sind auf der Außenseite des Steckverbinders Rastelemente angeordnet, mittels derer der Steckverbinder mit einem eine Leiterplatte aufnehmenden weiteren Gehäuse verrastbar ist.

Die Erfindung wird nachfolgend anhand eines bevorzugten Ausführungsbeispieles näher erläutert. Die Fig. zeigen:
- Fig. 1: eine perspektivische Explosionsdarstellung eines Steckverbinders für Leiterplatten,
- Fig. 2a: einen Querschnitt durch den zusammengesetzten Steckverbinder, wobei der Schnitt zwischen zwei Klemmstegen erfolgt,
- Fig. 2b: einen Querschnitt entlang der Schnittlinie P-P,
- Fig. 3: eine perspektivische Rückansicht des Steckverbinders,
- Fig. 4: eine perspektivische Explosionsdarstellung eines Verteileranschlussmoduls und
- Fig. 5: eine perspektivische Darstellung des zusammengesetzten Verteileranschlussmoduls.

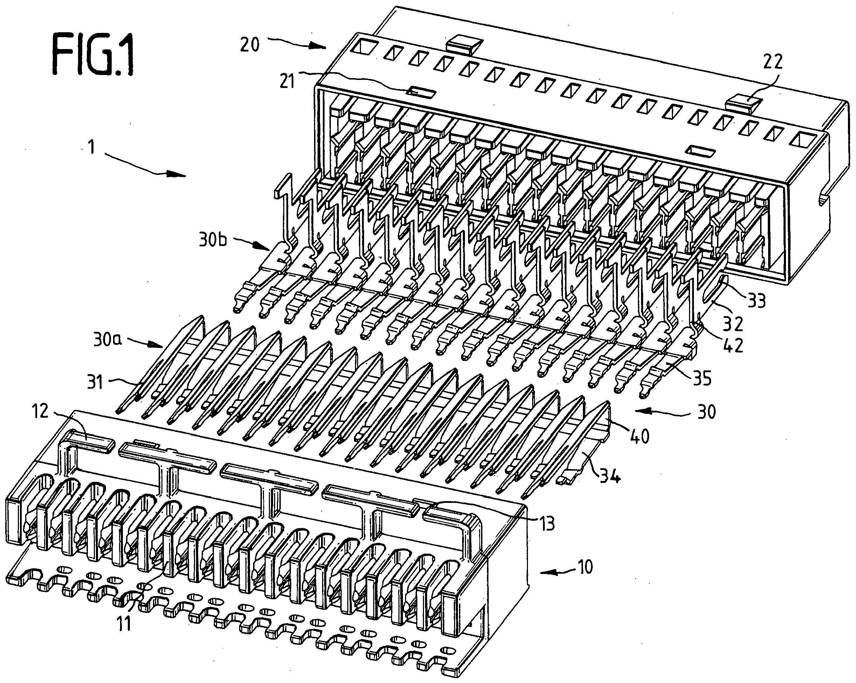

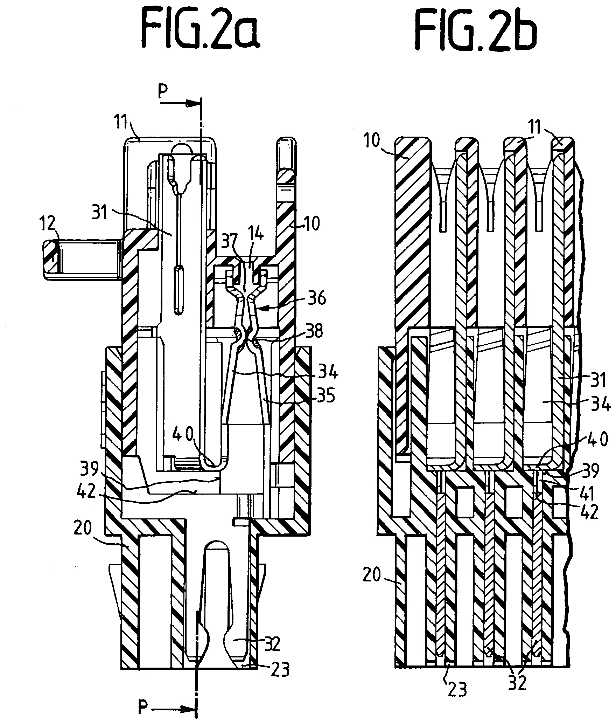

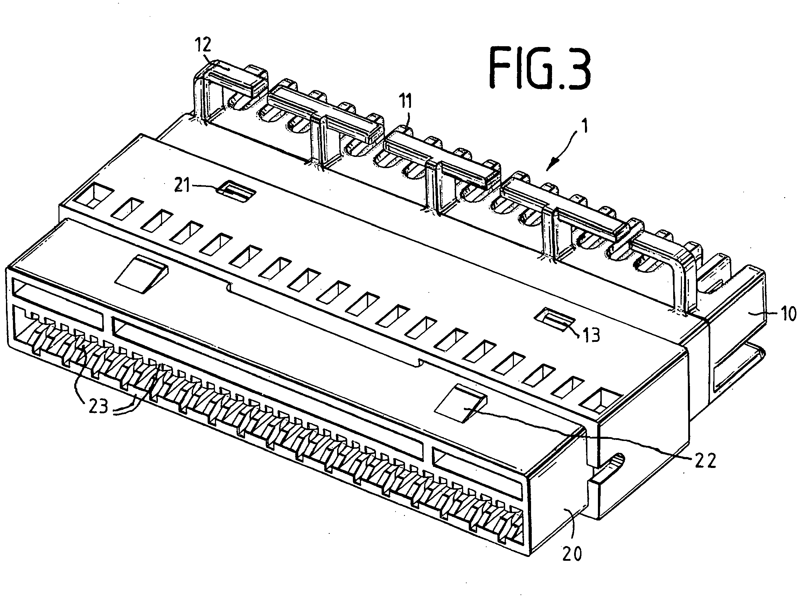

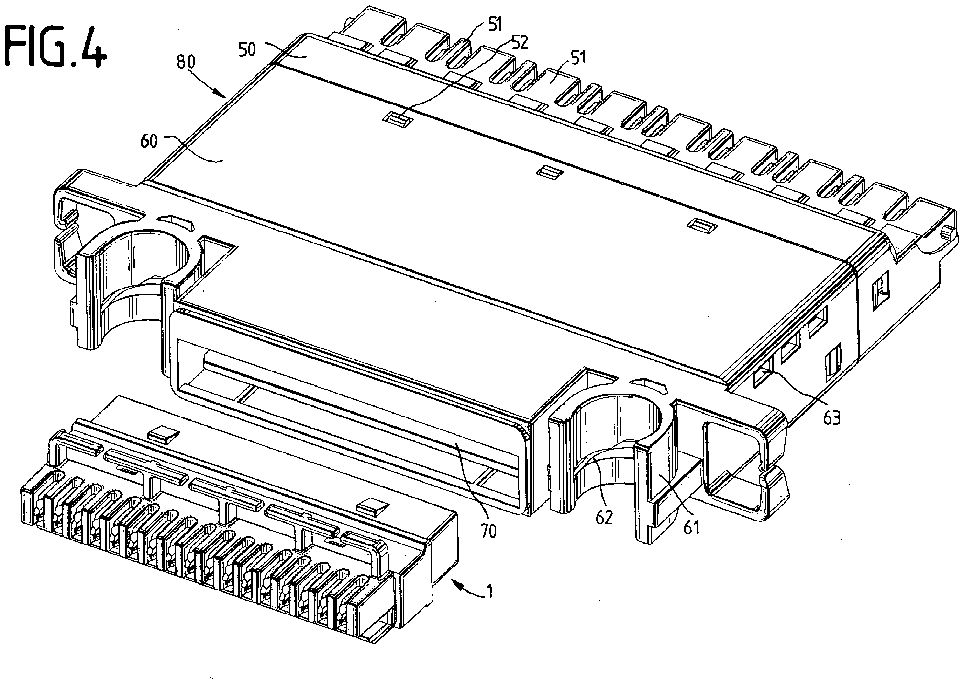

In der Fig. 1 ist perspektivisch der Steckverbinder 1 dargestellt. Der Steckverbinder 1 umfasst ein erstes Gehäuseteil 10, ein zweites Gehäuseteil 20 und eine Vielzahl von Kontaktelementen 30. Das Kontaktelement 30 umfasst jeweils ein erstes Teil 30a und ein zweites Teil 30b. Das erste Gehäuseteil 10 ist mit Klemmstegen 11, Drahtführungsösen 12 und Rastnasen 13 ausgebildet. Das zweite Gehäuseteil 20 ist mit Rastaufnahmen 21 und Rastnasen 22 ausgebildet. Des Weiteren bildet der zur Leiterplatte zugewandte Teil des zweiten Gehäuseteils 20 einen kammerartigen Bereich, an dessen Innenseiten oben und unten Rippen 23 angeordnet sind, was teilweise in Fig. 3 erkennbar ist, wobei die Rippen 23 im vorderen Bereich abgeschrägt sind. Durch die Abschrägung lässt sich der Steckverbinder leichter auf die Leiterplatte 70 (s. Fig. 4) schieben. Die Kontaktelemente 30 weisen jeweils einen Schneid-Klemm-Kontakt 31 und einen Gabelkontakt 32 auf, wobei Schneid-Klemm-Kontakt 31 und Gabelkontakt 32 um ca. 45° zueinander verdreht sind. Dabei ist der Schneid-Klemm-Kontakt 31 dem ersten Teil 30a des Kontaktelementes 30 und der Gabelkontakt 32 dem zweiten Teil 30b des Kontaktelementes 30 zugeordnet. Der Gabelkontakt 32 weist jeweils zwei abgerundete, nach innen gewölbte Kontaktbereiche 33 auf. Die Schneid-Klemm-Kontakte 31 der Kontaktelemente 30 werden in Aufnahmen zwischen den Klemmstegen 11 gesteckt, wo diese mechanisch fixiert sind. An dem Schneid-Klemm-Kontakt 31 ist ein erster Kontaktschenkel 34 angeordnet, der ausgehend von der Unterkante 40 des Schneid-Klemm-Kontaktes 31 nach oben gebogen in Richtung des Schneid-Klemm-Kontaktes 31 sich erstreckt. Ebenso erstreckt sich von der Unterkante 42 des Gabelkontaktes 32 ein zweiter Kontaktschenkel 35, der jedoch in entgegengesetzte Richtung verläuft. Die beiden Kontaktschenkel 34, 35 bilden zusammen einen Trennkontakt 36, was in Fig. 2 a dargestellt ist. Zum Zusammenbau werden die Gabelkontakte 32 in das zweite Gehäuseteil 20 eingeschoben. Des Weiteren werden die Schneid-Klemm-Kontakte 31 in das erste Gehäuseteil 10 eingeschoben, wobei dabei der Kontaktschenkel 34 in einen zweiten seitlichen Hohlraum des ersten Gehäuseteils 10 eintaucht. Anschließend wird das zweite Gehäuseteil 20 auf das erste Gehäuseteil 10 aufgerastet, wobei die Rastnasen 13 in die Rastaufnahmen 21 eingreifen. Dabei taucht der Kontaktschenkel 35 ebenfalls in den Hohlraum ein und bildet zusammen mit dem Kontakschenkel 34 den Trennkontakt 36.

Dieser zusammengesetzte Zustand ist in den Fig. 2a, b und 3 dargestellt. Dabei stellt Fig. 2a einen Querschnitt durch den Steckverbinder 1 dar, wobei die Schnittstelle zwischen zwei Klemmstegen liegt. Dabei bilden die beiden federnd gegeneinander liegenden Kontaktschenkel 34, 35 einen Trennkontakt 36. Dieser Trennkontakt 36 weist einen Einsteckbereich 37 und einen Kontaktbereich 38 auf. Dabei erkennt man, dass die beiden Kontaktschenkel 34, 35 sich im Kontaktbereich 38 berühren und einen elektrischen Kontakt bilden. Dadurch ist der Schneid-Klemm-Kontakt 31 elektrisch mit seinem zugeordneten Gabelkontakt 32 verbunden. Das erste Gehäuseteil 10 weist eine Einstecköffnung 14 für einen nicht dargestellten Trennstecker auf, der in den Einsteckbereich 37 des Trennkontaktes 36 einführbar ist. Dadurch werden die beiden Kontaktschenkel 34, 35 auseinander gebogen und der elektrische Kontakt zwischen Schneid-Klemm-Kontakt 31 und Gabelkontakt 32 aufgetrennt. Dabei ist der Trennstecker von der Länge derart ausgelegt, dass dieser nicht die Kontaktschenkel 34, 35 im Kontaktbereich 38 berührt. Dadurch wird verhindert, dass Abrieb des Trennsteckers den Kontakt im Kontaktbereich 38 verschlechtert. Zwischen den beiden unteren Bereichen des Schneid-Klemm-Kontaktes 31 und des Gabelkontaktes 32 befindet sich ein geschlitzter Klemmsteg 39, auf dem sich der Schneid-Klemm-Kontakt 31 mit seiner Unterkante 40 abstützt, wobei der Gabelkontakt 32 in dem Schlitz liegt (Fig. 2b). Wie man erkennen kann, liegt der Gabelkontakt 32 auf dem zweiten Gehäuseteil 20 auf und wird von oben durch das erste Gehäuseteil 10 eingespannt (Fig. 2a). Zwischen der Unterkante 40 des Schneid-Klemm-Kontakes 31 und dem Gabelkontakt 32 ist ein Luftspalt 41, so dass der elektrische Kontakt zwischen beiden ausschließlich über dem Kontaktbereich 38 erfolgt.

In der Fig. 4 ist perspektivisch ein Verteileranschlussmodul 80 für die Telekommunikations- und Datentechnik mit dem erfindungsgemäßen Steckverbinder 1 dargestellt. Das Verteileranschlussmodul 80 umfasst ebenfalls ein erstes Gehäuseteil 50 und ein zweites Gehäuseteil 60, die miteinander verrastbar sind. In dem Verteileranschlussmodul 80 ist eine Leiterplatte 70 angeordnet. Das zweite Gehäuseteil 60 ist mit zwei halbkreisförmigen Klemmelementen 61 ausgebildet, über die das Verteileranschlussmodul 80 auf nicht dargestellte Rundstangen aufgerastet werden kann. Zum Durchschleifen eines Masseanschlusses sind die Klemmelemente 61 geschlitzt, so dass ein ringförmiger Massekontakt, der auf der Leiterplatte 70 angeordnet ist, durch die Schlitze 62 ragt und einen elektrischen Kontakt mit den metallischen Rundstangen herstellt. Das erste Gehäuseteil 50 umfasst Klemmstege 51 und Rastnasen 52, die in Rastaufnahmen des zweiten Gehäuseteils 60 eingreifen. Die Klemmstege 51 weisen dabei eine unterschiedliche Breite auf, so dass das Übersprechen zwischen Kontaktpaaren reduziert wird. Zwischen den Klemmstegen 51 sind ebenfalls nicht dargestellte Kontaktelemente angeordnet, die im Bereich der Klemmstege 51 als Schneid-Klemm-Kontakte und zur Leiterplatte 70 als Gabelkontakte ausgebildet sind. Im Normalfall sind dabei diese Kontaktelemente identisch zu den Kontaktelementen 30 ausgebildet. Wird hingegen kein Trennkontakt benötigt, so können Schneid-Klemm-Kontakte und Gabelkontakt einstückig ausgebildet sein. Prinzipiell kann dabei das Gehäuseteil 50 analog dem Steckverbinder 1 ausgebildet sein. An den Seitenwänden ist das zweite Gehäuseteil 60 mit Lüftungsschlitzen 63 ausgebildet, um die Verlustwärme der Bauelemente auf der Leiterplatte 70 abzuführen.

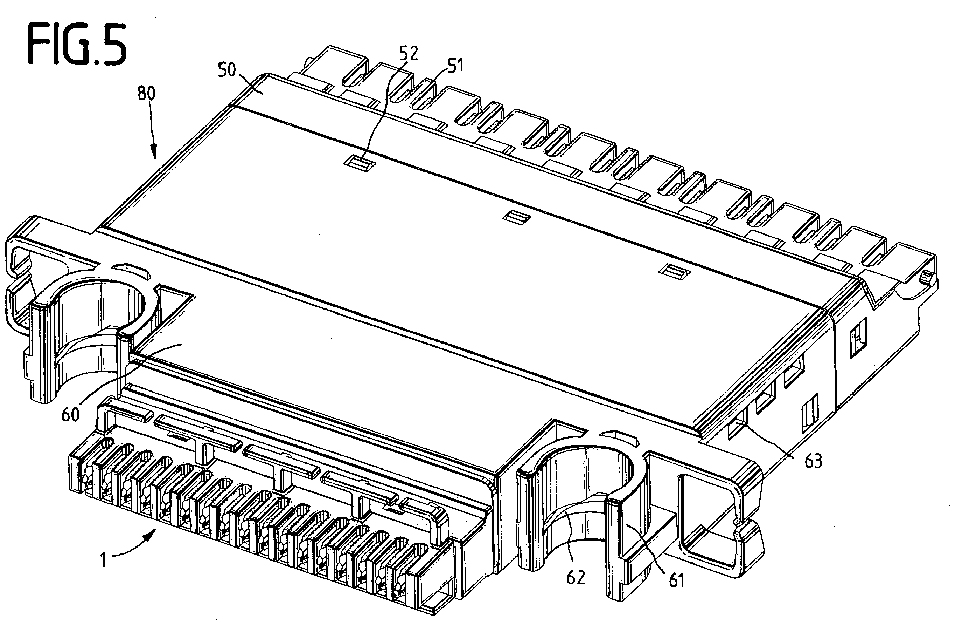

In der Fig. 5 ist schließlich das komplette Verteileranschlussmodul 80 mit eingerastetem Steckverbinder 1 dargestellt.

### Bezugszeichenliste

- 1: Steckverbinder
- 10: Gehäuseteil
- 11: Klemmstege
- 12: Drahtführungsösen
- 13: Rastnasen
- 14: Einstecköffnung
- 20: Gehäuseteil
- 21: Rastaufnahmen
- 22: Rastnasen
- 23: Rippen
- 30: Kontaktelemente
- 31: Schneid-Klemm-Kontakt
- 32: Gabelkontakt
- 33: Kontaktbereiche
- 34: Kontaktschenkel
- 35: Kontaktschenkel
- 36: Trennkontakt
- 37: Einsteckbereich
- 38: Kontaktbereich
- 39: Klemmsteg
- 40: Unterkante
- 41: Luftspalt
- 42: Unterkante
- 50: Gehäuseteil
- 51: Klemmstege
- 52: Rastnasen
- 60: Gehäuseteil
- 61: Klemmelemente
- 62: Schlitze
- 63: Lüftungsschlitze
- 70: Leiterplatte
- 80: Verteileranschlussmodul

## Patentansprüche

1. Steckverbinder (1) für Leiterplatten (70), umfassend eine Anzahl von Kontaktelementen (30), wobei die Kontaktelemente (30) jeweils zwei Anschlussseiten aufweisen, wobei die eine Anschlussseite als Schneid-Klemm-Kontakt (31) zum Anschließen von Adern und die andere Anschlussseite als Gabelkontakt (32) zum Kontaktieren von Anschlussflächen auf einer Leiterplatte (70) ausgebildet ist, und ein Kunststoffgehäuse, in das die Schneid-Klemm-Kontakte (31) der Kontaktelemente (30) einsteckbar sind, wobei mindestens eine Unterkante (40) des Schneid-Klemm-Kontaktes (31) sich am Kunststoffgehäuse abstützt, so dass die Kontaktelemente (30) bei auftretenden Anschaltkräften auf die Schneid-Klemm-Kontakte (31) verliersicher in dem Kunststoffgehäuse gehalten werden, wobei das Kunststoffgehäuse mindestens einen kammerförmigen Bereich umfasst und die Gabelkontakte (32) in Längsrichtung von dem Kunststoffgehäuse vollständig aufgenommen sind, wobei
das Kontaktelement (30) zweiteilig ausgebildet ist, wobei ein erstes Teil (30a) des Kontaktelementes (30) den Schneid-Klemm-Kontakt (31) und ein zweites Teil (30b) den Gabelkontakt (32) umfasst, wobei an beiden Teilen (30a, 30b) des Kontaktelementes (30) jeweils ein Kontaktschenkel (34, 35) angeordnet ist, wobei die beiden Kontaktschenkel (34, 35) einen Trennkontakt (36) bilden, wobei das Kunststoffgehäuse zweistückig ausgebildet ist, wobei die Gehäuseteile (10, 20) miteinander verrastbar sind, wobei das erste Gehäuseteil (10) den Schneid-Klemm-Kontakt (31) und das zweite Gehäuseteil (20) den Gabelkontakt (32) aufnimmt, wobei sich der Schneid-Klemm-Kontakt (31) mit seiner Unterkante auf einem geschlitzten Klemmsteg (39) des zweiten Gehäuseteils (20) abstützt, wobei sich der Klemmsteg zwischen den beiden unteren Bereichen des Schneid-Klemm-Kontaktes und des Gabelkontaktes befindet, der Gabelkontakt (32) in dem Schlitz des Klemmsteges (39) liegt und auf dem zweiten Gehäuseteil (20) aufliegt und durch das erste Gehäuseteil (10) von oben eingespannt wird.

2. Steckverbinder nach Anspruch 1, **dadurch gekennzeichnet, dass** sich der Kontaktschenkel (34) von der Unterkante (40) des Schneid-Klemm-Kontaktes (31) nach oben gebogen in Richtung des Schneid-Klemm-Kontaktes (31) erstreckt, wobei der Kontaktschenkel (35) sich in entgegengesetzter Richtung vom Gabelkontakt (32) in Richtung Schneid-Klemm-Kontakt (31) erstreckt.

3. Steckverbinder nach Anspruch 1 oder 2, **dadurch gekennzeichnet, dass** die Kontaktschenkel (34, 35) derart ausgebildet sind, dass diese einen Kontaktbereich (38) und einen Einsteckbereich (37) bilden, wobei durch Einstecken eines Trennsteckers in den Einsteckbereich (37) die Kontaktschenkel (34, 35) im Kontaktbereich (38) voneinander wegbewegt werden, wobei der Trennstecker den Kontaktbereich (38) selbst nicht berührt.

4. Steckverbinder nach einem der Ansprüche 1 bis 3, **dadurch gekennzeichnet, dass** in dem kammerförmigen Bereich an den Innenseiten Rippen (23) angeordnet sind, die Führungen für die Gabelkontakte (32) definieren, wobei die Kontaktbereiche (33) der Gabelkontakte (32) über die Rippen (23) hervorstehen.

5. Steckverbinder nach Anspruch 4, **dadurch gekennzeichnet, dass** die Rippen (23) im vorderen Bereich abgeschrägt sind.

6. Steckverbinder nach einem der vorangegangenen Ansprüche, **dadurch gekennzeichnet, dass** der Schneid-Klemm-Kontakt (31) und der Gabelkontakt (32) zueinander im Bereich von 45° zueinander verdreht angeordnet sind.

7. Steckverbinder nach einem der vorangegangenen Ansprüche, **dadurch gekennzeichnet, dass** der Steckverbinder (1) mit Drahtführungsösen (12) ausgebildet ist.

8. Steckverbinder nach einem der vorangegangenen Ansprüche, **dadurch gekennzeichnet, dass** auf der Außenseite des Steckverbinders (1) Rastelemente angeordnet sind, mittels derer der Steckverbinder (1) mit einem eine Leiterplatte (70) aufnehmenden weiteren Gehäuse verrastbar ist.

9. Verteileranschlussmodul für die Telekommunikations- und Datentechnik, umfassend ein Gehäuse, in dem von außen zugänglich Eingangs- und Ausgangskontakte zum Anschließen von Leitungen oder Adern angeordnet sind, wobei das Gehäuse mit einem Hohlraum ausgebildet ist, in dem eine Leiterplatte mit Funktionselementen angeordnet ist, die in dem Gehäuse abgestützt ist, wobei die Funktionselemente elektrisch zwischen den Eingangs- und Ausgangskontakten angeordnet sind, und mindestens die Ausgangskontakte als Schneid-Klemm-Kontakte ausgebildet sind,
**dadurch gekennzeichnet, dass**
mindestens die Ausgangskontakte als Steckverbinder (1) nach einem der Ansprüche 1 bis 8 ausgebildet sind.

## Claims

1. A plug connector (1) for printed circuit boards (70), comprising a number of contact elements (30), where the contact elements (30) each have two connection ends, where one connection end is in the form of an insulation displacement contact (31) for connecting wires and the other connection end is in the form of a tuning fork contact (32) for making contact with pads on a printed circuit board (70), and a plastic housing into which the insulation displacement contacts (31) of the contact elements (30) can be inserted, where at least one lower edge (40) of the insulation displacement contact (31) is supported on the plastic housing, so that the contact elements (30) are held captively in the plastic housing when connection forces act on the insulation displacement contacts (31), the plastic housing comprising at least one chamber-like region, and the tuning fork contacts (32) being fully accommodated in the longitudinal direction by the plastic housing,
wherein
the contact element (30) is of two-part design, with a first portion (30a) of the contact element (30) comprising the insulation displacement contact (31) and a second portion (30b) comprising the tuning fork contact (32), a respective contact limb (34, 35) being arranged on the two portions (30a, 30b) of the contact element (30), with the two contact limbs (34, 35) forming an isolating contact (36), wherein the plastic housing is of two-part design, with the housing portions (10, 20) being able to be latched to one another, wherein the first housing portion (10) receives the insulation displacement contact (31) and the second housing portion (20) receives the tuning fork contact (32), wherein the insulation displacement contact (31) is supported by its lower edge on a slotted clamping bar (39) of the second housing portion (20), wherein the clamping bar (39) is situated between the lower regions of the insulation displacement contact (31) and the fork contact (32), the tuning fork contact (32) being arranged in the slot of the clamping bar (39) and rests on the second housing portion (20) and is clamped from above by the first housing portion (10).

2. The plug connector as claimed in claim 1, wherein the contact limb (34) extends from the lower edge (40) of the insulation displacement contact (31) in an upward curve in the direction of the insulation displacement contact (31), with the contact limb (35) extending in the opposite direction from the tuning fork contact (32) in the direction of the insulation displacement contact (31) .

3. The plug connector as claimed in claim 1 or 2, wherein the contact limbs (34, 35) are in a form such that they form a contact region (38) and an insertion region (37), with the insertion of an isolating connector into the insertion region (37) moving the contact limbs (34, 35) in the contact region (38) away from one another, the isolating connector not touching the contact region (38) itself.

4. The plug connector as claimed in one of claims 1 to 3, wherein the inner sides of the chamber-like region have ribs (23) arranged on them which define guides for the tuning fork contacts (32), the contact regions (33) of the tuning fork contacts (32) protruding beyond the ribs (23).

5. The plug connector as claimed in claim 4, wherein the ribs (23) are beveled in the front region.

6. The plug connector as claimed in one of the preceding claims, wherein the insulation displacement contact (31) and the tuning fork contact (32) are arranged so as to be twisted with respect to one another in the region of 45° with respect to one another.

7. The plug connector as claimed in one of the preceding claims, wherein the plug connector (1) is produced with wire routing eyes (12).

8. The plug connector as claimed in one of the preceding claims, wherein the outer side of the plug connector (1) has latch elements arranged on it which can be used to latch the plug connector (1) to a further housing which accommodates a printed circuit board (70).

9. A distributor connection module for telecommunications and data technology, comprising a housing in which input and output contacts for connecting lines or wires are arranged such that they are externally accessible, where the housing is designed to have a cavity which contains a printed circuit board having functional elements which is supported in the housing, the functional elements being arranged electrically between the input and output contacts, and at least the output contacts being in the form of insulation displacement contacts,
wherein
at least the output contacts are in the form of plug connectors (1) as claimed in one of claims 1 to 8.

## Revendications

1. Connecteur (1) pour cartes de circuit imprimé (70), comprenant un nombre d'éléments de contact (30), les éléments de contact (30) comportant chacun deux côtés de raccordement, l'un des côtés de raccordement étant conçu sous la forme d'un contact par serrage autodénudant (31), destiné à raccorder des fils et l'autre côté de raccordement étant conçu sous la forme d'un contact à fourche (32) pour la mise en contact de surfaces de raccordement sur une carte de circuit imprimé (70), et un boîtier en matière plastique, dans lequel les contacts par serrage autodénudants (31) des éléments de contact (30) sont enfichables, sachant qu'au moins une arête inférieure (40) du contact par serrage autodénudant (31) s'appuie sur le boîtier en matière plastique, de sorte que, lorsque des forces d'activation sont exercées sur les contacts par serrage autodénudants (31), les éléments de contact (30) soient retenus de manière imperdable dans le boîtier en matière plastique, le boîtier en matière plastique comprenant au moins une zone en forme de chambre et les contacts à fourche (32) étant entièrement logés dans le boîtier en matière plastique, dans la direction longitudinale,
l'élément de contact (30) étant conçu en deux parties, sachant qu'une première partie (30a) de l'élément de contact (30) comprend le contact par serrage autodénudant (31) et une deuxième partie (30b) comprend le contact à fourche (32), sur les parties (30a, 30b) de l'élément de contact (30) étant placée chaque fois une branche de contact (34, 35), les deux branches de contact (34, 35) formant un contact de coupure (36), le boîtier en matière plastique étant conçu en deux pièces, les pièces du boîtier (10, 20) pouvant s'enclencher l'une dans l'autre, sachant que la première pièce du boîtier (10) loge le contact par serrage autodénudant (31) et la deuxième pièce du boîtier (20) loge le contact à fourche (32), par son arête inférieure, le contact par serrage autodénudant (31) s'appuyant sur une barrette de serrage (39) fendue de la deuxième pièce de boîtier (20), la barrette de serrage se trouvant entre les deux zones inférieures du contact par serrage autodénudant et du contact à fourche, le contact à fourche (32) se trouvant dans la fente de la barrette de serrage (39) et reposant sur la deuxième pièce du boîtier (20) et étant enserré par le haut par la première pièce du boîtier (10).

2. Connecteur selon la revendication 1, **caractérisé en ce que** la branche de contact (34) s'étend à partir de l'arête inférieure (40) du contact par serrage autodénudant (31) en étant recourbée vers le haut, dans la direction du contact par serrage autodénudant (31),
la branche de contact (35) s'étendant dans la direction opposée, à partir du contact à fourche (32) dans la direction du contact par serrage autodénudant (31).

3. Connecteur selon la revendication 1 ou 2, **caractérisé en ce que** les branches de contact (34, 35) sont conçues de telle sorte qu'elles forment une zone de contact (38) et une zone d'enfichage (37), sachant que par enfichage d'une fiche de séparation dans la zone d'enfichage (37), dans la zone de contact (38) les branches de contact (34, 35) sont déplacées en éloignement l'une de l'autre, la fiche de séparation ne touchant pas la zone de contact (38) proprement dite.

4. Connecteur selon l'une quelconque des revendications 1 à 3, **caractérisé en ce que** dans la zone en forme de chambre, sur les faces intérieures sont placées des nervures (23) qui définissent des guidages pour les contacts à fourche (32), les zones de contact (33) des contacts à fourche (32) débordant par-dessus les nervures (23).

5. Connecteur selon la revendication 4, **caractérisé en ce que** les nervures (23) sont biseautées dans la zone avant.

6. Connecteur selon l'une quelconque des revendications précédentes, **caractérisé en ce que** le contact par serrage autodénudant (31) et le contact à fourche (32) sont placés en décalage en rotation dans l'ordre de 45°.

7. Connecteur selon l'une quelconque des revendications précédentes, **caractérisé en ce que** le connecteur (1) est conçu avec des oeillets de guidage des fils (12).

8. Connecteur selon l'une quelconque des revendications précédentes, **caractérisé en ce que** sur la face extérieure du connecteur (1) sont placés des éléments d'enclenchement, au moyen desquels le connecteur (1) peut s'enclencher avec un boîtier supplémentaire, logeant une carte de circuit imprimé (70) .

9. Module de raccordement d'un distributeur dans la branche technologique des télécommunications et des données, comprenant un boîtier, dans lequel sont placés en étant accessibles par l'extérieur des contacts d'entrée et de sortie destinés à raccorder des lignes ou des fils, sachant que le boîtier est conçu avec une cavité dans laquelle est placée la carte de circuit imprimé avec des éléments fonctionnels qui s'appuie dans le boîtier, les éléments fonctionnels étant placés électriquement entre les contacts d'entrée et de sortie et au moins les contacts de sortie étant conçus sous la forme de contacts par serrage autodénudants,
**caractérisé en ce qu'**au moins les contacts de sortie sont conçus sous la forme d'un connecteur (1) selon l'une quelconque des revendications 1 à 8.
